# EUROPÄISCHE PATENTSCHRIFT

(11) **EP 2 401 905 B1**
(45) Veröffentlichungstag und Bekanntmachung des Hinweises auf die Patenterteilung: **06.01.2016**
(21) Anmeldenummer: 11159419.8
(22) Anmeldetag: 23.03.2011
(51) Int. Cl.: A01D 41/127

(54) **Verfahren zur Einstellung zumindest eines Arbeitsorgans einer selbstfahrenden Erntemaschine**
Method for adjusting at least one working part of a self-propelled harvester
Procédé de réglage d'au moins un organe de travail d'une moissonneuse automobile

(30) Priorität: 01.07.2010 DE 102010017687
(43) Veröffentlichungstag der Anmeldung: 04.01.2012
(73) Patentinhaber: CLAAS Selbstfahrende Erntemaschinen GmbH, 33428 Harsewinkel (DE)
(72) Erfinder: Baumgarten, Joachim, 48361, Beelen (DE); Neu, Sebastian, 49196, Bar Laer (DE); Heitmann, Christoph, 48231, Warendorf (DE); Bussmann, Christoph, 33428, Harsewinkel (DE); Wilken, Andreas, 49143, Bissendorf (DE); Vöcking, Henner, 33397, Rietberg (DE)

(56) Entgegenhaltungen:
- EP-A1- 1 277 388
- EP-A1- 1 446 997
- EP-A1- 1 704 767
- DE-A1- 19 705 841
- DE-A1-102005 031 426

## Beschreibung

Die Erfindung betrifft ein Verfahren zur Einstellung zumindest eines von mehreren an einem Ernteprozess beteiligten Arbeitsorganen einer selbstfahrenden Erntemaschine gemäß dem Oberbegriff des Anspruches 1.

Aus der DE 197 05 841 A1 ist ein Verfahren zum Betreiben einer landwirtschaftlichen Erntemaschine bekannt, das eine automatische Einstellung eines Verarbeitungsschrittes in Abhängigkeit von einem Ergebnis erfolgt. Hierzu wird durch eine Regelung die Einstellung des Verarbeitungsschrittes hinsichtlich des Passierens von Grenzwerten überwacht, und es wird ein Hinweis an eine Bedienperson gegebenen, wenn ein Grenzwert passiert wurde. Darüber hinaus ist die Regelung dazu eingerichtet, automatisch auf das Passieren eines Grenzwertes zu reagieren und selbsttätig entsprechende Maßnahmen einzuleiten, die dazu führen, dass die Einstellung des Verarbeitungsschrittes in den Bereich unterhalb des Grenzwertes zurückgeführt wird.

Das aus der DE 197 05 841 A1 bekannte Verfahren greift zur Einstellung sowohl der Sollwerte als auch der Grenzwerte auf in einer Speichereinrichtung hinterlegte Informationen zurück, welche in Abhängigkeit von der Vorgabe der zu verarbeitenden Fruchtart von der Bedienperson ausgewählt werden. Diese Informationen werden als Sollwerte für die Einstellung eines Verarbeitungsschrittes herangezogen, anhand derer der Soll-/Istwert-Vergleich durchgeführt wird, der der Regelung zu Grunde liegt. Die Istwert-Erfassung erfolgt durch entsprechende Sensoren, die die Verarbeitungsschritte überwachen und einer Auswertevorrichtung zuführen, in der der Soll-/Istwert-Vergleich durchgeführt wird.

Aus der gattungsbildenden EP 1 446 997 A1 ist eine Methode zur Optimierung von einstellbaren Parametern einer Maschine bekannt, bei der die Optimierung der einstellbaren Parameter durch Abarbeitung zumindest eines in einem Datenverarbeitungssystem hinterlegten Vorgehensalgorithmus erfolgt wobei die Optimierung der einstellbaren Parameter weitestgehend von dem Erfahrungswissen des Maschinisten entkoppelt wird, sodass der durchzuführende Optimierungsprozess schneller zu optimierten Maschineneinstellungen führt.

Die EP 1 704 767 A1 offenbart ein Verfahren zur Ermittlung eines an einen Ernteprozess angepassten Ziel-Einstellwertes für einen Steuerparameter eines Arbeitsaggregates einer Erntemaschine. Dabei werden zur Ermittlung eines optimalen, Ziel-Einstellwerts für einen bestimmten Steuerparameter zunächst für mehrere verschiedene Arbeitsergebnisparameter jeweils Arbeitsergebnis-Kennlinien in Abhängigkeit von den betreffenden Steuerparametern ermittelt. Der Ziel-Einstellwert des Steuerparameters wird dann basierend auf einer Kombination der einzelnen ermittelten Arbeitsergebnis-Kennlinien bestimmt.

Das in der DE 197 05 841 A1 offenbarte Verfahren ermöglicht es, die Bedienperson der Erntemaschine hinsichtlich erforderlicher Einstellarbeiten von Arbeitsorganen zur Durchführung der Verarbeitungsschritte der Erntemaschine zu entlasten, jedoch ist das Verfahren von der Qualität der vorgegebenen Informationen zur Einstellung respektive Auswahl eines Sollwertes der Arbeitsorgane abhängig. Eine Reaktion auf sich ändernde Konditionen, beispielsweise während eines laufenden Ernteprozesses als auch bei einem Einsatz auf verschiedenen Schlägen bei gleicher Fruchtart, ist nicht vorgesehen.

Aus der DE 10 2005 031 426 A1 ist ein Verfahren zur automatischen Einstellung von Betriebsparametern einer landwirtschaftlichen Arbeitsmaschine bekannt, gemäß dem ein Kennfeld in mehrere, von einem Betriebsparameter abhängige Teilkennfelder unterteilt wird. Jedem Teilkennfeld ist jeweils eine Arbeitsmaschine zugeordnet, die entsprechend den vorgeschlagenen Einstellungen von Betriebsparametern, die aus einem Teilkennfeld resultieren, betrieben wird. Während des Betriebes der Arbeitsmaschine werden durch Sensoren erfasste Daten zur Überprüfung des Arbeitsergebnisses, das in Folge von Änderungen der Betriebsparameter beeinflusst wird, zu einer Optimierung der jeweiligen Teilkennfelder herangezogen. Einschränkend wirkt sich bei diesem Verfahren aus, dass ein ermittelter optimaler Betriebsparameter erst dann zur Anwendung kommt, wenn dieser durch eine versierte Bedienperson als Einstellung ausgewählt und übernommen wird oder wenn der aktuell gewählte Betriebsparameter, wie gemäß der DE 197 05 841 A1 vorgeschlagen wird, in Abhängigkeit von einem bestimmten Schwellwert, eingestellt wird.

Aufgabe der vorliegenden Erfindung ist es, ein Verfahren der eingangs genannten Art bereitzustellen, das, neben einer Entlastung der Bedienperson, eine flexiblere Reaktion auf sich ändernde Randbedingungen während des Ernteprozesses zulässt.

Dies wird erfindungsgemäß durch die kennzeichnenden Merkmale des Anspruches 1 gelöst.

Vorteilhafte Weiterbildungen sind Gegenstand der Unteransprüche.

Gemäß Anspruch 1 wird vorgeschlagen, dass eine initiale Modellierung des Ernteprozesses durch zumindest ein Kennfeld, welches auf einer für den ablaufenden Ernteprozess charakteristischen Datenbasis basiert, erfolgt. Die initiale Modellierung des Ernteprozesses bildet die Basis für eine Grundeinstellung der Arbeitsorgane der Erntemaschine. Anhand der initialen Modellierung des Ernteprozesses wird eine Bestimmung eines initialen Arbeitspunktes des mindestens einen einzustellenden Arbeitsorganes durchgeführt. Im Anschluss an die Bestimmung eines initialen Arbeitspunktes erfolgt die Anpassung des zumindest einen Kennfeldes auf der Basis von aktuell durch Messungen erhobener, den Ernteprozess beeinflussender Daten. Die Adaption des Kennfeldes führt zu der Bestimmung eines neuen Arbeitspunktes des mindestens einen Arbeitsorganes. An diesen sich aus dem vorangehenden Schritt der Adaption des Kennfeldes ergebenden neuen Arbeitspunkt wird die Einstellung des Arbeitsorganes ausgehend von dem initialen Arbeitspunkt iterativ angenähert. Ein wesentlicher Vorteil dieses Verfahrens besteht darin, dass das für die Modellierung des ablaufenden Ernteprozesses verwendete Kennfeld dem aktuellen, fortlaufenden Änderungen unterworfenen Ernteprozess nachgeführt wird, wodurch die Einstellungen des mindestens einen Arbeitsorganes an die sich kontinuierlich verändernden Erntebedingungen angepasst werden, um den Betrieb des mindestens einen Arbeitsorganes möglichst in unmittelbarer Nähe des optimalen Arbeitspunktes zu erreichen beziehungsweise aufrecht zu erhalten. Diese Vorgehensweise verleiht dem erfindungsgemäßen Verfahren ein hohes Maß an Anpassungsfähigkeit an sich ändernde Erntebedingungen, die bei der Einstellung des mindestens einen Arbeitsorganes einfließen können. Durch die iterative Annäherung verringert sich kontinuierlich die Differenz zu den optimalen Einstellparametern. Da das erfindungsgemäße Verfahren automatisiert durchgeführt wird, ist eine vertiefte Kenntnis über die Prozessabläufe und die oftmals zwischen den Arbeitsorganen bestehenden Wechselwirkungen einer landwirtschaftlichen Erntemaschine untereinander seitens der Bedienperson nicht erforderlich, so dass diese sich vor allem auf andere Aufgaben während des Ernteprozesses konzentrieren kann.

Für die initiale Modellierung des Ernteprozesses kann eine Grundparametrisierung des mindestens einen Kennfeldes durchgeführt werden, aus der initiale Einstellparameter des mindestens einen Arbeitsorganes bestimmt werden. Die Grundparametrisierung kann auf der Basis von ausgewerteten Daten früherer Ernteprozesse und/oder von spezifischen Informationen des Mähdreschers und/oder des historischen Erfahrungswissens von Bedienpersonen erfolgen, welche in einer Steuerungseinrichtung zur Durchführung des Verfahrens hinterlegbar sind. Zu Beginn eines Ernteprozesses werden mit der Grundparametrisierung das grundsätzliche Verhalten der einzelnen Arbeitsorgane sowie deren arbeitsorganspezifischen Wechselwirkungen untereinander abgebildet und initiale Einstellparameter der Arbeitsorgane vorgegeben. Für eine Verfeinerung der Grundparametrisierung kann der Bediener eine zusätzliche Information, wie beispielsweise die zu erntende Fruchtart, vorgeben, aus der dann auf Grund der für diese Fruchtart hinterlegten spezifischen Informationen die initiale Modellierung des mindestens einen Kennfeldes durchgeführt wird. Die Durchführung der Messung der den Ernteprozess beeinflussenden Daten über den gesamten Erntezeitraum eines Schlages sowie deren Auswertung stellt eine Quelle für eine Verbreiterung der Datenbasis dar, die für die Grundparametrisierung des mindestens einen Kennfeldes herangezogen werden kann.

Vorteilhafterweise können nach einem Annäherungsschritt an den neu bestimmten Arbeitspunkt die initialen Einstellparameter des mindestens einen Arbeitsorganes adaptiert werden. In diesem Verfahrensschritt können die in der Grundparametrisierung bestimmten initialen Einstellparameter des mindestens einen Arbeitsorganes an die aktuell tatsächlich bestehenden Erntebedingungen angepasst werden. Diese Verfahrensweise trägt zudem dazu bei, die Variation der Datenbasis zu erhöhen, die für die Grundparametrisierung herangezogen wird.

Erfindungsgemäß wird nach einem Annäherungsschritt an den neuen Arbeitspunkt das Erreichen eines quasistationären Maschinenverhaltens abgewartet. Das Abwarten eines quasistationären Maschinenverhaltens reduziert den erforderlichen Berechnungsaufwand bei der Adaption des mindestens einen Kennfeldes, da dynamische Anteile, wie Einlauf- oder Auslaufvorgänge, bei einer Änderung der Einstellungen eines Arbeitsorganes, unberücksichtigt bleiben.

Dabei wird eine Validierung des adaptierten Kennfeldes durchgeführt. In diesem Verfahrensschritt kann die aus der Adaption des Kennfeldes resultierende Abweichung des Modells von den tatsächlichen Ernteprozessbedingungen bestimmt werden. In Abhängigkeit von der Größenordnung der Abweichungen des Modells von den zu modellierenden tatsächlichen Prozessbedingungen kann entschieden werden, ob eine Veränderung des Kennfeldes durchgeführt wird. In dem Fall einer Adaption des Kennfeldes kann im Anschluss daran ein statistischer Vergleich der das Kennfeld charakterisierenden Größen vor und nach der Adaption durchgeführt werden.

Erfindungsgemäß werden in Abhängigkeit von dem Resultat der Validierung des adaptierten Kennfeldes die sich ergebenden Werte für die Einstellparameter der Arbeitsorgane beibehalten oder auf ihre dem vorangehend bestimmten Arbeitspunkt entsprechenden Werte zurückgesetzt.

Des Weiteren kann der aus der Adaption des Kennfeldes resultierende Arbeitspunkt hinsichtlich seiner Plausibilität geprüft werden. Hierfür können die für den Ernteprozess relevanten Größen wie Reinigungsverluste, Kornanteile in der Überkehr, etc. als Vergleichsgrößen herangezogen werden. Dazu werden im Zuge der Plausibilitätsprüfung die Einstellparameter, die sich aus dem neu bestimmten Arbeitspunkt ergeben, der schrittweise angefahren wird, einer Analyse auf der Basis von in der Steuer- und Regeleinrichtung hinterlegtem Expertenwissen basiert, unterzogen, wobei das Expertenwissen die Zusammenhänge verschiedener Effizienzparameter, Qualitätskriterien und Arbeitsparameter der Arbeitsorgane berücksichtigt.

Alternativ kann die Adaption des mindestens einen Kennfeldes dynamisch durchgeführt werden. Die dynamische Adaption respektive der Verzicht auf das Einschwingen der Erntemaschine bis zum Erreichen eines quasistationären Zustandes hat den Vorteil, dass Änderungen der Erntebedingungen nahezu in Echtzeit erfasst und bei der Adaption des Kennfeldes berücksichtigt werden können.

Vorteilhafterweise kann die Einstellung des zumindest einen Arbeitsorganes in Abhängigkeit von der der Erntemaschine zugeführten Erntegutmenge durchgeführt werden, indem beispielsweise Messungen der Schichthöhe im Einzugskanal durchgeführt werden, aus denen der Durchsatz der zugeführten Erntegutmenge abgeleitet wird. Ebenso kann die Längs- und/oder Querneigung der Erntemaschine bei der Einstellung des mindestens einen Arbeitsorganes Berücksichtigung finden, die durch entsprechende Sensoren an der Erntemaschine erfasst wird.

Darüber hinaus kann die Einstellung des zumindest einen Arbeitsorganes in Abhängigkeit von der dem Arbeitsorgan zugeführten Erntegutmenge durchgeführt werden. Dies kann zusätzlich aber auch unabhängig von der Gesamtmenge des der Erntegutmaschine zugeführten Erntegutes erfolgen. Das Unterteilen der Erntegutmenge in Kornbestandteile und Nichtkornbestandteile ermöglicht eine zielorientiertere Einstellung der Arbeitsorgane.

Insbesondere kann das Verfahren zur Einstellung durch eine manuelle Beeinflussung eines Einstellparameters automatisch unterbrochen werden. Das Passivschalten des Automatismus bei einem manuellen Eingriff einer Bedienperson in den Betrieb der Erntemaschine ist dann sinnvoll, wenn die äußeren Umstände während des Ernteprozesses einen Eingriff der Bedienperson erforderlich werden lassen, um den Automatismus für die Dauer des Eingriffes übersteuern zu können.

In bevorzugter Weiterbildung des Verfahrens ist vorgesehen, dass die während des Ernteprozesses durch Messungen erhobenen, den Ernteprozess beeinflussenden Daten erfasst und abgespeichert werden. Diese Daten können für darauffolgende Ernteprozesse herangezogen werden, um den Vorgang der initialen Modellierung auf eine immer breiter werdende Datenbasis zu stellen, wodurch dieser zunehmend verfeinert sowie die Annäherung an den optimalen Arbeitspunkt zunehmend beschleunigt wird, da die Abweichungen zwischen dem initialen Arbeitspunkt und dem verfahrensgemäß angesteuerten optimalen Arbeitspunkt, die aus den jeweiligen aktuell vorherrschenden Erntebedingungen resultieren, geringer werden.

Das erfindungsgemäße Verfahren wird nachstehend anhand eines in den Zeichnungen dargestellten Ausführungsbeispieles näher erläutert.

Es zeigen:
- Fig. 1: eine schematisierte Seitenansicht einer landwirtschaftlichen Erntemaschine;
- Fig. 2: ein Ablaufdiagramm einer ersten Ausführungsform des Verfahrens;
- Fig. 3: ein Ablaufdiagramm einer zweiten Ausführungsform des Verfahrens;
- Fig. 4: eine Prinzipskizze eines Kennfeldes der Abscheidung;
- Fig. 5: eine Prinzipskizze eines Kennfeldes der Reinigung.
- Fig. 6: ein Ablaufdiagramm zur Maschinenschutzfunktion.

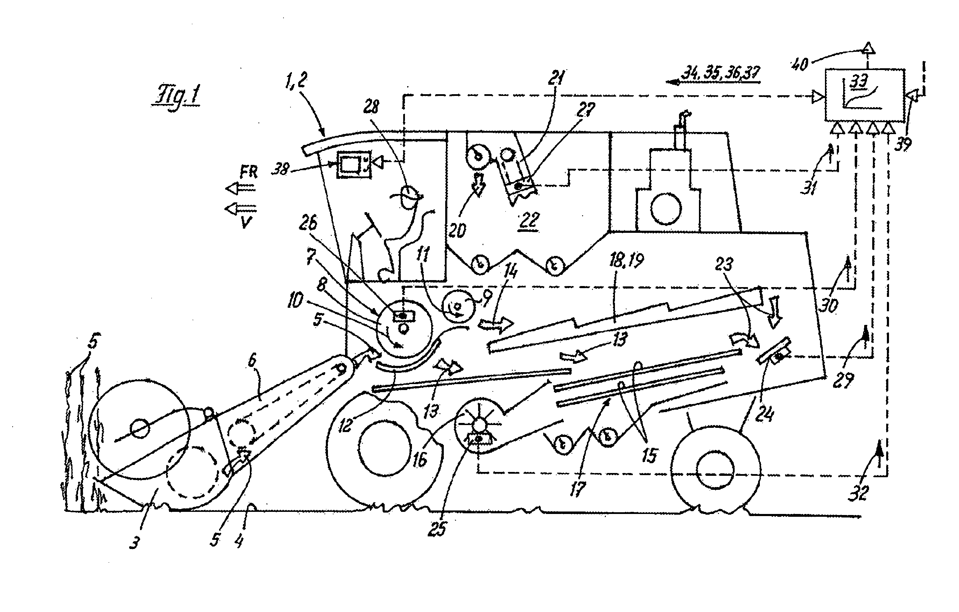

Zunächst wird an einer in Fig. 1 dargestellten, als Mähdrescher 2 ausgeführten landwirtschaftlichen Erntemaschine 1 die erfindungsgemäße Methode zur Optimierung einstellbarer Parameter von Arbeitsorganen in ihrer allgemeinen Form beschrieben. Der nachfolgend verwendete Begriff Arbeitsorgane umfasst alle an einer Erntemaschine mit dem Ernteprozess befassten Komponenten, die mittelbar oder unmittelbar einen Einfluss auf diesen ausüben. Dem Mähdrescher 2 ist in seinem in Fahrtrichtung FR weisenden frontseitigen Bereich ein sogenanntes Getreideschneidwerk 3 zugeordnet, welches das auf dem Boden 4 wachsende Erntegut 5 aberntet, zusammenführt und in seinem rückwärtigen Bereich einem Schrägförderorgan 6 des Mähdreschers 2 zuführt. Das Schrägförderorgan 6 übergibt das Erntegut 5 in seinem rückwärtigen Bereich an ein Dreschorgan 7, welches im dargestellten Ausführungsbeispiel aus einer Dreschtrommel 8 und einer dieser nachgeordneten Wendetrommel 9 besteht. Es liegt im Rahmen der Erfindung, dass das Dreschorgan 7 in an sich bekannter Weise mehrere Dreschtrommeln 8 aufnehmen oder als sogenannter Axial-Dresch- und Trennrotor ausgebildet sein kann. Durch die Rotationsbewegung der Dreschtrommel 8 und der ihr nachgeordneten Wendetrommel 9, angedeutet durch die Pfeile 10, 11, wird das Erntegut 5 entlang eines Dresch- und Abscheidekorbes 12 in den rückwärtigen Bereich des Dreschorgans 7 gefördert. Dabei wird der Erntegutstrom 5 in verschiedene Gutströme 13, 14 aufgeteilt, wobei der durch den Dresch- und Abscheidekorb 12 abgeschiedene Gutstrom 13 überwiegend von Körnern und der im rückwärtigen Bereich des Dreschorgans 7 austretende Gutstrom 14 überwiegend von Stroh gebildet wird. Nachdem die aus dem Dreschorgan 7 austretenden Gutströme 13, 14 weitere Arbeitsorgane, wie etwa eine aus einer oder mehreren Siebebenen 15 und einem diesen Siebebenen 15 zugeordneten Gebläse 16 bestehende Reinigungseinrichtung 17 sowie eine als Hordenschüttler 18 ausgeführte Trenneinrichtung 19, die auch als ein Abscheiderotor ausgeführt sein kann, durchlaufen haben, werden die nun im Wesentlichen von Beimengungen befreiten Körner 20 über nicht näher dargestellte Förderorgane 21 einer auf dem Mähdrescher 2 angeordneten Speichereinrichtung 22 zugeführt. Je nach Arbeitsqualität des Dreschorgans 7, der Reinigungseinrichtung 17 sowie der Trenneinrichtung 19 und der Beschaffenheit des Erntegutes 5 tritt ein mehr oder weniger großer Körnerstrom 23 im rückwärtigen Bereich des Mähdreschers 2 aus diesem aus. Dieser Körnerstrom 23 bildet den sogenannten Kornverlust, der mittels an sich bekannter und deshalb nicht näher erläuterter Kornverlustsensoren 24 ermittelt werden kann. Betreiber 28 derartiger landwirtschaftlicher Erntemaschinen 1 sind bestrebt diesen Kornverlust 23 möglichst gering zu halten. Hierfür konnte der Mähdrescher 2 bisher neben den bereits beschriebenen Körnersensoren 24 je nach Ausstattungsgrad mit weiteren Sensoren 25, 26, 27 bestückt sein, die im einfachsten Fall zum Beispiel als Drehzahlsensoren 25, 26 zur Ermittlung der Drehzahl des Gebläses 16 sowie der Dreschtrommel 8 beziehungsweise des Abscheiderotors ausgebildet waren. Weiter war es auch bisher bereits bekannt, sogenannte Durchsatzsensoren 27 einzusetzen, die beispielsweise die den Mähdrescher 2 durchlaufende Kornmenge 20 ermitteln. Im Zusammenhang mit der Durchsatzermittlung ist auch der Einsatz von Schichthöhensensoren im Einzugskanal 6 zu erwähnen. Die von den verschiedenen Sensoren 24 - 27 generierten Signale 29 - 32 wurden in einer auf dem Mähdrescher 2 angeordneten Steuer- und Regeleinrichtung 33 beispielsweise in Dreschtrommeldrehzahlsignale 34, Kornverlustsignale 35, Korndurchsatzsignale 36 und Gebläsedrehzahlsignale 37 umgewandelt, die dann über eine Anzeigeeinheit 38 dem Betreiber 28 permanent oder auf Abruf angezeigt wurden. Ferner ist es auch bekannt anstelle der Gesamtkornverluste 23 mittels der Kornsensoren 22 die Verluste einzelner Arbeitsorgane, wie etwa der Reinigungseinrichtung 17 oder der Trenneinrichtung 19, separat zu bestimmen. Zudem ist es aus dem Stand der Technik bekannt den Bruchkornanteil des geernteten Körnerstromes 20 zu ermitteln und dem Betreiber 28 anzuzeigen. Die Steuer- und Regeleinrichtung 33 kann zudem von externen Systemen Informationen 39 empfangen oder Informationen 40 an externe Systeme übermitteln.

Das Bestimmen von Einstellparametern für die einzelnen Arbeitsorgane unter Einhaltung einer vorgebbaren Zielstellung, wie beispielsweise der Einhaltung einer Kornverlustgrenze oder der Leistungssteigerung im Sinne einer höheren Flächenleistung oder einer Erhöhung des Durchsatzes bei konstanter Qualität, hat zur Folge, dass sich auf Grund der vielen verschiedenen, insbesondere sich gegenseitig beeinflussenden Einstellparameter eine optimale Einstellung der Arbeitsorgane auch für im Umgang mit Erntemaschinen versierte Bedienpersonen als sehr schwierig gestaltet. Die aus dem Stand der Technik bekannten Einstellverfahren greifen auf Vorgabewerte für eine konkret vorliegende Erntesituation zurück, auf deren Basis dann Einstellparameter für das jeweilige Arbeitsorgan vorgeschlagen werden, ohne die etwaig bestehenden Wechselwirkungen mit anderen Arbeitsorganen zu berücksichtigen. Die Verfahren gemäß dem eingangs genannten Stand der Technik reagieren jedoch auf sich im Verlauf des Ernteprozesses ändernde Konditionen lediglich auf Grund eines gezielten Eingriffes einer Bedienperson in den Prozess durch die Variation eines Einstellparameters für ein Arbeitsaggregat oder beim Passieren eines Grenzwertbereiches für einen Einstellparameter.

So schlägt die DE 10 2005 031 426 A1 vor, dass ein neu ermittelter Einstellparameter durch eine Bedienperson verifiziert werden muss, bevor dieser umgesetzt wird. Die Entscheidung darüber, ob der neu bestimmte Einstellwert zu einer Verbesserung des Ernteprozesses beiträgt, obliegt somit der Bedienperson und ist wiederum von ihrem Fachwissen abhängig, welches unterschiedlich ausgeprägt ist. Ebenfalls unberücksichtigt bleiben etwaige Auswirkungen auf andere Arbeitsorgane, die von dieser Einstellungsänderung unmittelbar betroffen sein können.

An diesem Punkt setzt das erfindungsgemäße Verfahren ein, um den Prozess der automatischen Einstellung unabhängig von dem Fachwissen einer Bedienperson zu gestalten, was zu einer weitergehenden Entlastung der Bedienperson führt, als dies bei dem in der DE 10 2005 031 426 A1 vorgeschlagenen Verfahren der Fall ist. Das erfindungsgemäße Verfahren zur automatischen Einstellung zumindest eines von mehreren in einem Ernteprozess zusammenarbeitenden Arbeitsorganen einer selbstfahrenden Erntemaschine, ist durch die nachstehenden Verfahrensschritte gekennzeichnet:
Zu Beginn des Ernteprozesses wird eine initiale Modellierung des Ernteprozesses, welche auf einer für den ablaufenden Ernteprozess charakteristischen Datenbasis basiert, durch die Bestimmung zumindest eines Kennfeldes durchgeführt. Daran schließt sich die Bestimmung eines initialen Arbeitspunktes des mindestens einen Arbeitsorganes anhand der initialen Modellierung an, mit dem die selbstfahrende Erntemaschine in Betrieb genommen wird. Während des laufenden Betriebes wird eine kontinuierliche Anpassung des zumindest einen Kennfeldes auf der Basis von aktuell durch Messung erhobenen, den Ernteprozess beeinflussenden Daten durchgeführt, um auf sich ändernde Erntebedingungen, die eine vorgebbare Zielvorgabe beeinflussen, reagieren zu können. In Abhängigkeit von der Adaption des Kennfeldes wird eine Bestimmung eines neuen Arbeitspunktes des mindestens einen Arbeitsorganes durchgeführt, welcher für die ausgewählte Zielvorgabe die optimalen Einstellwerte der Arbeitsorgane aufweist. Die Annäherung an den neuen Arbeitspunkt wird iterativ durchgeführt, so dass äußere Einflüsse bei der automatischen Einstellung kontinuierlich Berücksichtigung finden.

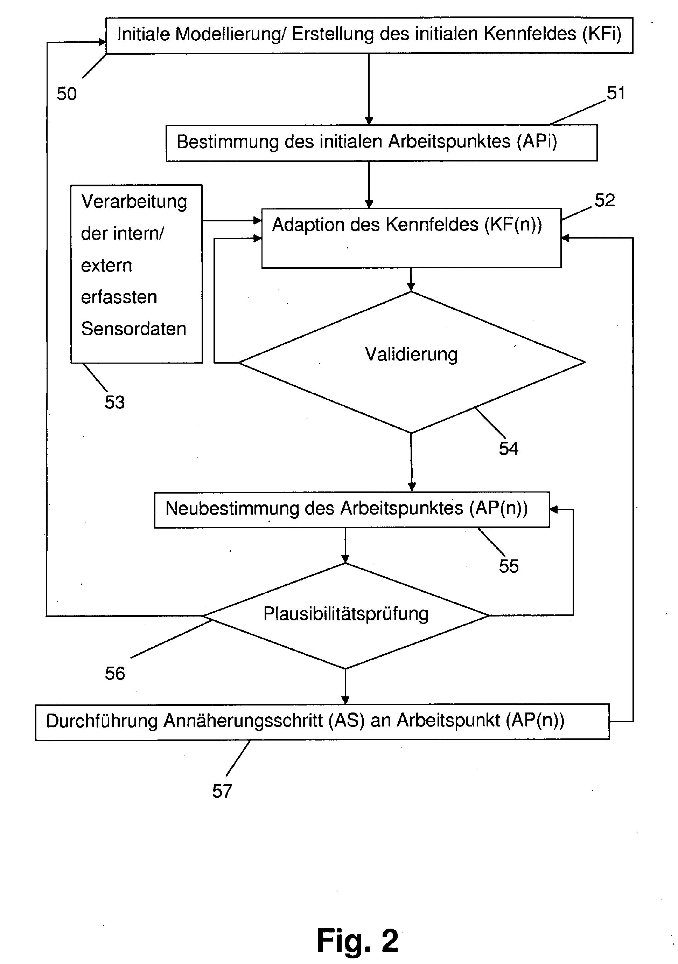

Der Ablauf des Verfahrens wird nachstehend anhand eines Flussdiagrammes gemäß der Darstellung in Fig. 2 näher erläutert, welches eine erste Ausführungsform des Verfahrens zeigt. Zu Beginn des Automatisierungsprozesses wird in einem ersten Schritt 50 ein initiales Modell des Ernteprozesses bereitgestellt. Die Initialisierung des Modells setzt dabei zunächst die Auswahl von jeweils zumindest einer Eingang- und einer Ausgangsgröße voraus, die für die Regelung maßgeblich sind. Eine Eingangsgröße ließe sich beispielsweise aus der Vorgabe einer Fruchtart herleiten, aus der die für die spezifische Fruchtart einzustellende Rotordrehzahl eines Abscheiderotors ableitbar ist. Als eine Ausgangsgröße käme beispielsweise die Einhaltung eines bestimmten Wertes für den Reinigungsverlust in Frage. Auf der Basis dieser Eingangs- und Ausgangsgrößen wird zu Beginn des Ernteprozesses zu dessen initialen Modellierung zumindest ein initiales Kennfeld KFi bestimmt. Das zumindest eine in dem Schritt 50 bestimmte initiale Kennfeld KFi beschreibt das grundlegende Verhalten zumindest eines der in einem Ernteprozess zusammenwirkenden Arbeitsorgane der Erntemaschine 1 sowie deren mögliche Wechselwirkungen untereinander, soweit diese gegeben sind. Die Grundparametrierung des initialen Kennfeldes KFi erfolgt beispielsweise auf der Basis von ausgewerteten Daten, die in früheren Ernteprozessen gesammelt wurden, und/oder spezifischen Informationen über die Erntemaschine 1 und/oder dem gesammelten Erfahrungswissen von Bedienpersonen. Das initiale Kennfeld KFi bildet die Grundlage der Bestimmung eines initialen Arbeitspunktes APi im Schritt 51, anhand dessen die Einstellparameter der Arbeitsorgane zu Beginn eines Ernteprozesses bestimmt werden.

In einem nachfolgenden Schritt 52 erfolgt die Adaption des Kennfeldes KF zur Anpassung an sich ändernde Konditionen während des laufenden Ernteprozesses. Ausgehend von dem initialen Kennfeld KFi wird bei der erstmaligen Anpassung im Zuge des Ernteprozesses ein neues Kennfeld KF(n) bestimmt. Die in Klammern gesetzten Indizes definieren die Anzahl der durchgeführten Adaptionen eines Kennfeldes KF während des Ernteprozesses. Für die Adaption des Kennfeldes KF(n) fließen die in einem Schritt 53 kontinuierlich erfassten Messdaten der an dem Mähdrescher 2 angeordneten Sensoren 25 - 27, insbesondere die den Erntegutstrom innerhalb des Mähdreschers 2 betreffenden Informationen, sowie Daten externer, nicht an dem Mähdrescher 2 befindlicher Sensoren ein, die die aktuell bestehenden Konditionen während des Ernteprozesses auf einem Feld repräsentieren. Diese Informationen werden herangezogen, um das Kennfeld KF(n) kontinuierlich an die tatsächlichen Gegebenheiten während des laufenden Ernteprozesses zu adaptieren.

Jede Anpassung eines Kennfeldes KF(n) wird in einem Schritt 54 validiert, um zu prüfen ob das neu bestimmte Kennfeld KF(n) bei einem Vergleich mit statistisch ausgewerteten Daten früherer Erntevorgänge, die für das Verfahren bereitgehalten werden, korrelieren. Divergieren das neu bestimmte Kennfeld KF(n) und die korrespondieren, für den Vergleich herangezogenen Daten in einem definierbaren Maß, so wird die Anpassung gemäß dem Kennfeldes KF(n) auf die zuvor gültigen Werte des Kennfeldes KF(n-1) zurückgeführt. Der Vorgang der Adaption des Kennfeldes KF(n) wird in Schritt 52 auf der Grundlage neuer Daten, die zwischenzeitlich von den Sensoren erfasst wurden, erneut ausgeführt.

Bei erfolgreicher Validierung in Schritt 54 wird in einem nachfolgenden Schritt 55 ausgehend von dem initial festgelegten Arbeitspunkt APi ein neuer Arbeitspunkt AP(n) bestimmt. Für die nachfolgende Abarbeitung des Schrittes 55, in dem ein neuer Arbeitspunkt AP(n) bestimmt wird, wird stets der vorangegangene Arbeitspunkt AP(n-1) zu Grunde gelegt.

Der neu bestimmte Arbeitspunkt AP(n) wird in Schritt 56 einer Plausibilitätsprüfung unterzogen, um zu vermeiden, dass auf Grund des neu bestimmten Arbeitspunktes AP(n) Einstellparameter für die Arbeitsorgane ausgegeben werden, die einen sinnvollen Erntebetrieb ausschließen würden. Beispielhaft wären hier zu hohe oder zu niedrige Rotordrehzahlen zu nennen beziehungsweise eine zu kleine oder zu große Einstellung der Siebweite der Reinigungseinrichtung 17. Hierzu werden im Zuge der Plausibilitätsprüfung die Einstellparameter, die sich aus dem neu bestimmten Arbeitspunkt AP(n) ergeben, der schrittweise angefahren wird, einer Analyse auf der Basis von in der Steuer- und Regeleinrichtung 33 hinterlegtem Expertenwissen basiert, unterzogen, wobei das Expertenwissen die Zusammenhänge verschiedener Effizienzparameter, Qualitätskriterien und Arbeitsparameter der Arbeitsorgane berücksichtigt. Beispielsweise stellt der Reinigungskornverlust ein konträres Qualitätskriterium zu der Erhöhung der Drehzahl des Reinigungsgebläses 16 zwecks Verbesserung der Kornreinheit während des schrittweisen Anfahrens des Arbeitspunkt AP(n) dar, da mit zunehmender Luftströmung in der Reinigungseinrichtung 17 die Gefahr des Ausblasens von Körnern aus der Reinigungseinrichtung 17 zunimmt, was letztlich zu einer Verschlechterung des Effizienzparameters "Kornverlust" führt. In dem Schritt 56 werden die konträren Effizienzparameter und/oder Qualitätskriterien diesbezüglich überprüft. Wird keine Abweichung eines konträren Effizienzparameter und/oder Qualitätskriteriums identifiziert, wird in dem nachfolgenden Schritt 57 der Annäherungsschritt AS an den bestimmten Arbeitspunkt AP(n) vollzogen. Wird hingegen eine unzulässige Abweichung der konträren Effizienzparameter und/oder Qualitätskriterien identifiziert, mündet die Plausibilitätsprüfung in dem Schritt 56 in den Schritt 55.

Wurde, wie zuvor ausgeführt, im Zuge der Plausibilitätsprüfung in dem Schritt 56 der neue Arbeitspunkt AP(n) bestätigt, erfolgt in dem darauffolgenden Schritt 57 die Durchführung eines Annäherungsschrittes AS an den Arbeitspunkt AP(n). Der Durchführung eines Annäherungsschrittes AS geht die Bestimmung einer Schrittweite SW(n) voraus. Die Bestimmung der Schrittweite SW(n) ergibt sich erstmalig aus der Bestimmung der Differenz des in dem Schritt 55 bestimmten Arbeitspunktes AP(n) und dem in Schritt 51 initial eingestellten Arbeitspunkt APi und liefert eine initiale Schrittweite SW(i). Im laufenden Ernteprozess, das heißt nach zumindest einmaliger Ausführung eines Annäherungsschrittes AS gemäß dem Schritt 57, erfolgt die Bestimmung der jeweiligen Schrittweite SW(n+1) durch die Bestimmung der Differenz zwischen dem eingestellten Istwert für den Arbeitspunkt AP(n), der sich aus der Addition der Werte des vorangehend bestimmten Arbeitspunktes AP(n-1) und der Schrittweite SW(n) ergibt. Die Schrittweite SW(n) wird vorzugsweise auf einen Wert eingestellt, der kleiner als der sich ergebende Wert der vorgenannten Differenz ist. Im Anschluss an die Durchführung eines Annäherungsschrittes AS in Schritt 57 des Flussdiagrammes wird auf Schritt 52 zurück gesprungen, um die Einflüsse auf den Ernteprozess, die durch die Sensoren fortlaufend erfasst werden, dynamisch berücksichtigen zu können. Schlägt die Plausibilitätsprüfung gemäß dem Schritt 56 wiederholt fehl, kann die Datenbasis auf der das mindestens eine Kennfeld KF(n) beruht gelöscht werden. In diesem Fall wird auf den Schritt 50 zurück verzweigt, um auf der Basis einer zwischenzeitlich variierten Datenbasis zumindest ein neues initiales Kennfeld KFi zu bestimmen.

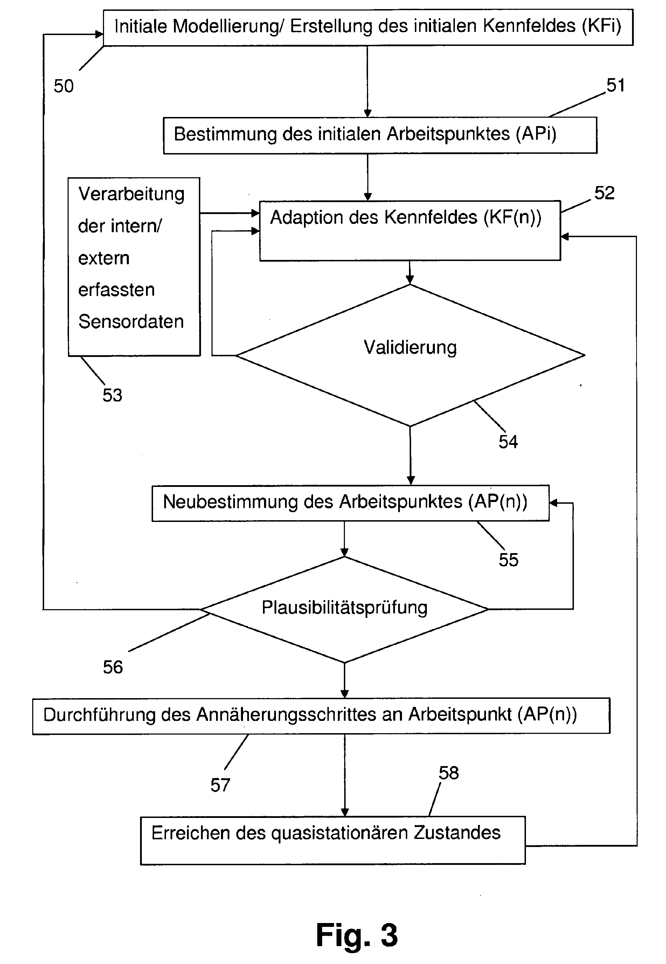

Die Darstellung in Fig. 3 zeigt ein Ablaufdiagramm einer zweiten Ausführungsform des Verfahrens. Diese Ausführungsform unterscheidet sich von der gemäß dem Flussdiagramm in Fig. 2 dadurch, dass nach der Durchführung des Annäherungsschrittes AS in Schritt 57 noch ein Schritt 58 nachgeschaltet ist, welcher eine Verharrungsphase bei der Ausführung des Verfahrens darstellt, in der über einen definierbaren Zeitraum hinweg das Erreichen eines quasistationären Zustandes der Erntemaschine 1 abgewartet wird, bevor zu dem Schritt 52 für eine erneute Adaption des Kennfeldes KF(n) unter Berücksichtigung aktualisierter Messdaten zurück gesprungen wird. Während des Zeitraumes, in dem das Erreichen des quasistationären Zustandes des Arbeitsorganes abgewartet wird, fließen die von den Sensoren erfassten Messdaten nicht in den Optimierungsprozess ein. Dieser zusätzliche Schritt ermöglicht die Reduzierung des Rechenaufwandes, der für die Durchführung des erfindungsgemäßen Verfahrens erforderlich wird. Dafür kommt dem Schritt 54 zur Validierung des Kennfeldes KF(n) eine größere Bedeutung zu, um signifikante Abweichungen des Modells von den tatsächlichen Erntebedingungen feststellen zu können. Um zu Vermeiden, dass sich während eines längeren Betriebes mindestens eines Arbeitsorganes in einem bestimmten Arbeitsbereich systematische Messfehler ausbilden und diese aufaddieren, werden in einem parallel zu den Verfahrensschritten Adaption des Kennfeldes 52, Validierung 54 und Plausibilitätsprüfung 56 ablaufenden Procedere in regelmäßigen Zeitintervallen wechselweise Extremwerte der Eingangsgrößen an dem mindestens einen Arbeitsorgan eingestellt und angefahren. Das Einstellen und Anfahren eines Extremwertes der Eingangsgröße erfolgt jeweils nach dem Erreichen des quasistationären Zustandes. Hierbei wird ausgehend von einem ersten Extremwert einer Eingangsgröße nach dem Verstreichen des Zeitintervalles ein diesem entgegengesetzter, äußerster Extremwert der Eingangsgröße angefahren. Daran anschließend wird der dem ersten nachfolgende, nächst höhere Extremwert angefahren und von diesem ausgehend der dem äußersten Extremwert vorangehende niedrigere Extremwert. Beispielhaft wird dieses Procedere anhand der Gebläsedrehzahl des der Reinigungseinrichtung 17 zugeordneten Gebläses 16 erläutert, wonach zunächst die niedrigste Gebläsedrehzahl und anschließend die höchste Gebläsedrehzahl eingestellt wird. Im Anschluss daran wird die zweitniedrigste sowie die zweithöchste Gebläsedrehzahl eingestellt usw.. Die Extremwerte einer Eingangsgröße bilden so genannte Stützstellen, die angefahren werden, um den Eingangsraum besser abdecken zu können, innerhalb dessen sich die Werte des mindestens einen Kennfeldes KF(n) bei der Validierung gemäß dem Schritt 54 befinden dürfen.

Das zuvor erläuterte Verfahren wird nachfolgend anhand zweier konkreter Ausführungsbeispiele, der Einstellung der Abscheidung und der Reinigung, weiter verdeutlicht.

In dem ersten Ausführungsbeispiel wird das in den Flussdiagrammen gemäß den Fig. 2 beziehungsweise 3 visualisierte Verfahren zur Einstellung eines Arbeitsorganes anhand des Prozesses der Abscheidung respektive eines Abscheiderotors beschrieben. Die wesentlichen konstruktiven Eigenschaften eines Abscheiderotors ebenso wie die einer Reinigungsvorrichtung sind hinlänglich bekannt, so dass auf die Beschreibung diesbezüglicher Details verzichtet wird. Leistungsbestimmende Größen eines Mähdreschers mit Rotorabscheidung sind die Motorleistung des Mähdreschers, die Abscheideverluste sowie die Reinigungsverluste. Die Reinigungsverluste verändern sich mit einer zunehmenden Spreubelastung negativ, da die Einstellungen der Reinigungseinrichtung 17 entsprechend angepasst werden müssen, um den größeren Volumenstrom verarbeiten zu können, was, in Folge des Erhöhten Volumenstromes, wiederum zu höheren Reinigungsverlusten führt. Die Spreubelastung ist von der Drehzahl des Abscheiderotors abhängig. Bei einer zunehmenden Rotordrehzahl steigt die Abscheidung von Korn und Spreu (Summe der Nichtkornbestandteile) aus dem Erntegutstrom durch den Abscheiderotor an, während bei einer Reduzierung der Rotordrehzahl die Abscheidung von Korn und Spreu (Summe der Nichtkornbestandteile) aus dem Erntegutstrom abnimmt, was mit einem ansteigenden Abscheideverlust einerseits und einer sinkenden Spreubelastung andererseits einhergeht, wodurch die Reinigungseinrichtung 17 entlastet wird. Ein Ziel des Verfahrens ist es, eine ausgewogene Einstellung der beiden sich gegenseitig beeinflussenden Arbeitsorgane, des Abscheiderotor und der Reinigungseinrichtung 17, zu bestimmen, die in gesamtheitlicher Betrachtung zu einer Minimierung der Verluste in der Abscheidung und der Reinigung führt.

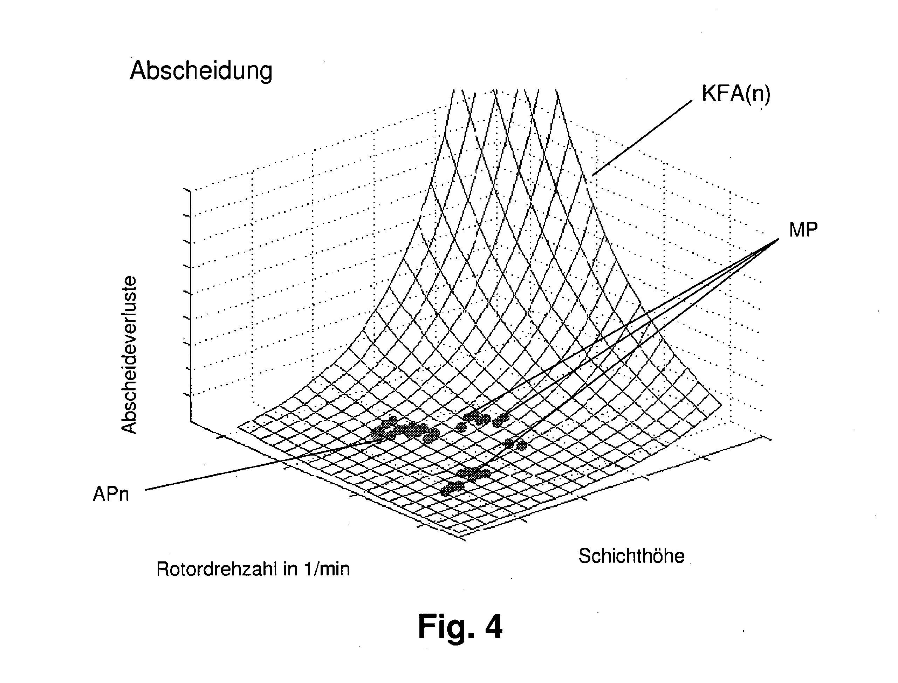

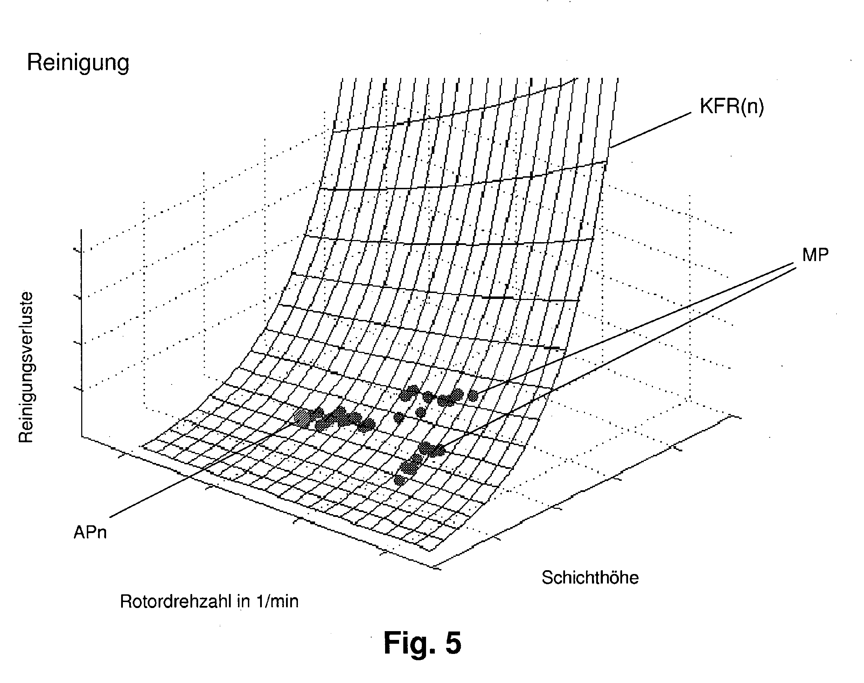

Das Verfahren beginnt mit der initialen Modellierung des Abscheideprozesses durch die Bestimmung zweier Kennfelder KFA und KFR, wie in den Fig. 4 und 5 dargestellt, eines für die Abscheidung und eines für die Reinigung, da auf Grund der Veränderung der Abscheiderotordrehzahl zwischen diesen Arbeitsorganen Wechselwirkungen auftreten. Die Bestimmung der initialen Kennfelder KFAi und KFRi erfolgt beispielsweise auf der Grundlage einer Vielzahl von in den vorangegangenen Erntevorgängen erfassten Bestandsdaten für eine jeweilige Fruchtart, aus denen die initiale Einstellung der Drehzahl des Abscheiderotors zu Beginn eines neuen Erntevorganges abgeleitet wird. Die mögliche Auswahl von einer oder mehrerer Eingangsgrößen zur Bestimmung des Kennfeldes KF für den Prozess der Abscheidung umfasst neben der Rotordrehzahl die Einstellung der Rotorverschlussklappen, die Längs- und/oder Querneigung des Mähdreschers 2 oder eine von dem Durchsatz in den verschiedenen Arbeitsorganen des Mähdreschers 2 abhängige Größe. Die durchsatzabhängige Größe lässt sich weiter aufschlüsseln, beispielsweise hinsichtlich des Korndurchsatzes und/oder der Schichthöhe und/oder der Fördergeschwindigkeit im Schrägförderorgan 6, auf dem Rücklaufboden oder dem Vorbereitungsboden. Die durchsatzabhängigen Größen lassen sich durch geeignete Sensoren, wie beispielsweise einen Schichthöhensensor im Schrägförderorgan 6 bestimmen.

Für die mögliche Auswahl einer oder mehrerer Ausgangsgrößen bei der Bestimmung der initialen Kennfelder für die automatische Einstellung der Abscheidung kommen beispielsweise der Abscheideverlust, der Reinigungsverlust, der Leistungsbedarf des Abscheiderotors sowie der Kornanteil oder der Spreuanteil in der Überkehr oder die Reinheit des Erntegutes im Korntank in Frage. Auf der Grundlage dieser Eingangs- und Ausgangsgrößen wird das mindestens eine initiale Kennfeld KFi bestimmt, welches den Ausgangspunkt des Verfahrens bildet.

In Fig. 4 ist exemplarisch ein Kennfeld KFA(n) für den Abscheidungsprozess dargestellt, welches die Abscheideverluste als Ausgangsgröße in Abhängigkeit von der Rotordrehzahl sowie einer durchsatzabhängigen Größe wie der Schichtdicke im Schrägförderorgan 6 als Eingangsgrößen zeigt. Die Rotordrehzahl des Abscheiderotors lässt sich, wie oben erwähnt, mit Hilfe des Drehzahlsensors bestimmen, während die Schichtdicke durch die Verwendung eines Schichthöhensensors im Schrägförderorgan 6 bestimmbar ist. In Fig. 5 ist beispielhaft ein Kennfeld KFR(n) für die Reinigung dargestellt, welches die Reinigungsverluste als Ausgangsgröße über die Rotordrehzahl und die Schichtdicke darstellt. Um das Ziel einer ausgewogenen Einstellung von Abscheidung und Reinigung zu erreichen, werden beide Kennfelder KFA(n) und KFR(n) herangezogen, um den optimalen Arbeitspunkt AP(n) der Rotordrehzahl aus den Kennfeldern KFA(n) und KFR(n) zu bestimmen, das heißt den gemeinsamen Arbeitspunkt AP(n), an dem bei den aktuell vorherrschenden Erntebedingungen eine Minimierung der Verluste in der Abscheidung und der Reinigung gegeben ist. Die Darstellung des Kennfeldes KFA in Fig. 4 zeigt neben dem Arbeitspunkt AP(n) für die Rotordrehzahl weitere Messpunkte MP, die während des Erntevorganges aufgenommen wurden. Die Verteilung der Messpunkte MP resultiert zum Einen aus den Schwankungen in der Schichthöhe, welche auf Bestandsschwankungen und das Wechseln von Fahrgeschwindigkeiten während des Erntevorganges zurückzuführen sind, und zum Anderen auf der Variation der Rotordrehzahl auf Grund der schrittweisen Annäherung an den Arbeitspunkt AP(n). Entsprechendes gilt für die Darstellung des Kennfeldes KFR in Fig. 5.

Als zweites Ausführungsbeispiel wird die Einstellung der Reinigungseinrichtung 17 angeführt, für dessen Einstellung in Kennfeld initialisiert wird. Das initiale Kennfeld KFi der Reinigungseinrichtung 17 wird in bereits beschriebener Weise aus Bestandsdaten abgeleitet. Als mögliche Eingangsgrößen stehen beispielsweise, neben den bereits erwähnten durchsatzabhängigen Größen, die Gebläsedrehzahl, die Obersieböffnungsweite, die Untersieböffnungsweite, die Längs- und Querneigung des Mähdreschers 2 sowie die Windleitblecheinstellung zur Verfügung. Als Ausgangsgröße können beispielsweise der Reinigungsverlust, der Kornanteil in der Überkehr, der Spreuanteil in der Überkehr sowie die Sauberkeit im Korntank vorgesehen sein.

Eine weitere vorteilhafte Anwendung des erfindungsgemäßen Verfahrens besteht in der Vermeidung von Störungen der Arbeitsmaschine in Folge von Gutflussproblemen, die zu einem Verstopfen oder Blockieren von Arbeitsorganen führen können, die wiederum die Funktionalität des Verfahrens einschränken würden. Hierzu wird das erfindungsgemäße Verfahren zum Zweck des Schutzes der Maschinenfunktionen verwendet, indem das mindestens eine Kennfeld KF(n) für das betroffene Arbeitsorgan an die veränderte Situation, hervorgerufen durch die Störung, angepasst wird, auf dessen Basis der neue Arbeitspunkt AP(n) bestimmt wird. Von der eingangs beschriebenen angestrebten Optimierung des Ernteprozesses hinsichtlich eines ausgewogenen Verlustverhältnisses von miteinander in Wechselwirkung stehender Arbeitsorgane wird insofern abgewichen, als dass die nunmehr stattfindende automatisierte Einstellung gemäß dem Verfahren die Beseitigung der Ursache der Störung sowie die Aufrechterhaltung des Betriebes der Erntemaschine 1 zum Gegenstand hat. Nach dem Beseitigen der Störung kann sich das erfindungsgemäße Verfahren wieder automatisch an der ursprünglich vorgegebenen Zielstellung orientieren.

Einige der eingangs genannten Arbeitsorgane, wie zum Beispiel das Gebläse 16 oder das Dreschorgan 7 beziehungsweise der Axial-Dresch-Trennrotor, werden hinsichtlich ihrer Antriebsdrehzahl überwacht, wodurch an diesen auftretender Schlupf bestimmbar wird. Das Auftreten von Schlupf an einem der Arbeitsorgane ist ein Indiz für eine Störung, die insbesondere auf Gutflussprobleme zurückgehen kann. Entsprechend führt beispielsweise eine Störung an dem Dreschorgan 7 auf Grund einer sich anbahnenden Verstopfung zwischen Dreschtrommel 8 und Dresch- und Abscheidekorb 12 zu einem Leistungsabfall des Mähdreschers 2. Darüber hinaus kann sich diese Störung in Richtung des Getreideschneidwerkes 3 fortsetzen, da das von dem Getreideschneidwerk 3 aufgenommene Erntegut mit zunehmender Ausprägung des Erntegutstaus nicht mehr weiter abgefördert werden kann. Zur Vermeidung einer Störung des Betriebes wird vorgesehen, dass Maßnahmen eingeleitet werden, um die Störung des Mähdreschers 2 beziehungsweise im Prozessablauf zu beseitigen oder bereits im Vorfeld zu vermeiden. Das Auftreten von Schlupf an einem oder mehreren Arbeitsorganen, der im Zuge der Prozessüberwachung durch die Sensoren erfasst wird, führt zu einer Anpassung des mindestens einen Kennfeldes KF(n) für das betroffene Arbeitsorgan, sowie der Bestimmung eines neuen Arbeitspunktes AP(n), der dann schrittweise angesteuert wird.

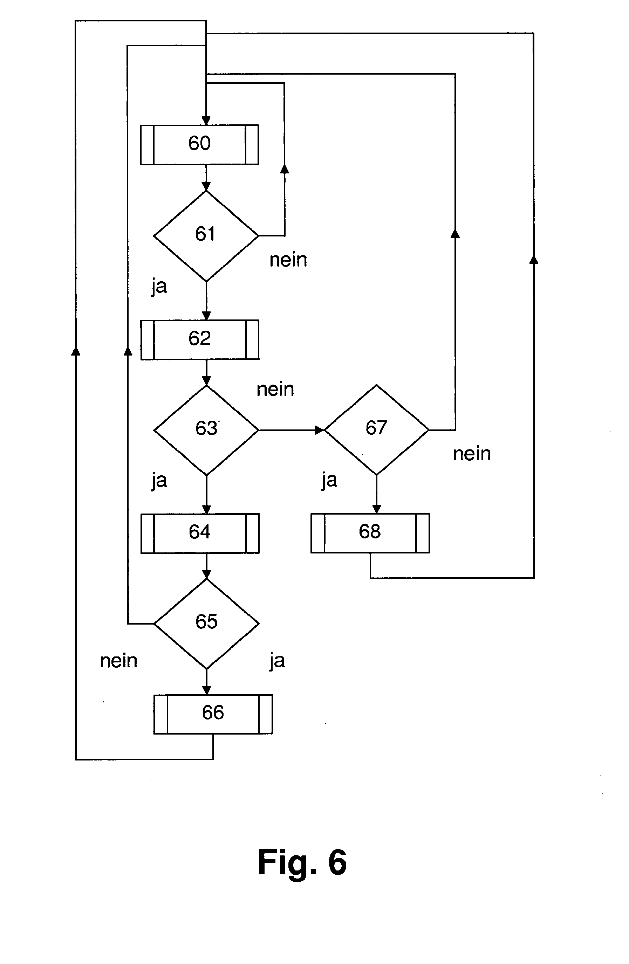

Dieser Ablauf wird nachstehend anhand des Ablaufdiagrammes gemäß Fig. 6 exemplarisch erläutert. In einem Schritt 60 erfolgt die kontinuierliche Überwachung der Arbeitsorgane respektive die Schlupfermittlung an den Arbeitsorganen. Ein nachfolgender Schritt 61 dient dazu, zu überprüfen, ob eine Überschreitung eines Grenzwertes für den Schlupf vorliegt. Hierzu wird in üblicher Weise ein Soll-Ist-Wert-Vergleich des gemessenen Schlupfes mit einem voreinstellbaren Grenzwert für den Schlupf durchgeführt. Wird eine Grenzwertüberschreitung festgestellt, wirkt sich dies auf das vor dem Zeitpunkt des Auftretens des Schlupfes gültige Kennfeld KF(n-1) aus, welches auf der Basis der Messwerte neu bestimmt wird, um daraus einen neuen Arbeitspunkt AP(n) des oder der von der Störung betroffenen Arbeitsorgane zu bestimmen. Dazu wird in einem Schritt 62 eine Gegenmaßnahme eingeleitet. Diese kann darin bestehen, dass eine Verringerung des Durchsatzes angestrebt wird, indem die Vorfahrtgeschwindigkeit sequentiell reduziert und/oder die Drehzahl des betroffenen Arbeitsorganes erhöht wird, um über die höhere Drehzahl in Folge der sich reduzierenden Erntegutdichte in dem Arbeitsorgan das Antriebsdrehmoment zu verringern.

In einem Schritt 63 wird geprüft, ob die Drehzahländerung an dem betroffenen Arbeitsorgan ihrerseits zum Passieren einer Grenzdrehzahl geführt hat. Wurde die Grenzdrehzahl nicht passiert, so wird in Schritt 64 die Drehzahl des Arbeitsorganes weiter erhöht. Damit die Erhöhung der Drehzahl nicht zu einem Passieren des Grenzwertes für den Schlupf führt, wird in Schritt 65 der Wert für den gemessenen Schlupf mit dem voreingestellten Grenzwert abzüglich eines Sicherheitszuschlages verglichen. Liegt der aktuell gemessene Wert für den Schlupf unterhalb des Grenzwertes abzüglich des Sicherheitszuschlages, so wird in einem nachfolgenden Schritt 66 die Vorfahrtgeschwindigkeit erhöht. Bei einem Passieren des in Schritt 65 zu überwachenden Grenzwertes für den Schlupf abzüglich des Sicherheitszuschlages wird auf Schritt 60 zurück verzweigt.

Wurde in Schritt 63 hingegen festgestellt, dass die Grenzdrehzahl überschritten wurde, wird in einem Schritt 67 geprüft, ob der gemessene Schlupf des von einer Störung betroffenen Arbeitsorganes unterhalb des Grenzschlupfes abzüglich des Sicherheitszuschlages liegt. Liegt der gemessene Schlupf unterhalb dieses Grenzschlupfes, wird die Vorfahrtgeschwindigkeit sequentiell erhöht. Bei einer Überschreitung des Grenzschlupfes abzüglich des Sicherheitszuschlages wird auf den Schritt 60 zurück verwiesen.

Nach dem Beseitigen der Störung an dem betroffenen Arbeitsorgan wird sich auf Grund der sich erneut ändernden Ernteprozesssituation in der Erntemaschine 1 ein neues Kennfeld KF(n+1) einstellen, da sich die Eingangsgröße Erntegutdurchsatz verändert, wodurch sich auch ein neuer Arbeitspunkt AP(n+1) ergibt, der verfahrensgemäß iterativ angesteuert wird.

Das erfindungsgemäße Verfahren kann vorzugsweise in einem Fahrerassistenzsystem zum Einsatz kommen, welches auswählbare Prozessführungsstrategien umfasst, wobei das Auswahlkriterium einer Prozessführungsstrategie die für einen bestimmten Verwendungszweck des Erntegutes erforderliche Qualität des Erntegutes und/oder die Optimierungskriterien der Arbeitsorgane sind. Dies dient dazu, dass innerhalb kürzester Zeit eine optimierte und an den Kundenwunsch angepasste Arbeitsweise der landwirtschaftlichen Arbeitsmaschine erzielt wird. Bei den Auswahlkriterien kann es sich um "Nahrungspflanzen", "Saatgüt", "Futterpflanzen" und/oder "Industriepflanzen" handeln, die eine auf die notwendige Qualität des Erntegutes abgestimmte optimierte Arbeitsweise der landwirtschaftlichen Arbeitsmaschine erforderlich werden lassen. Die Handhabung des Fahrerassistenzsystems ergibt sich in besonders einfacher und übersichtlicher Weise für den Bediener dadurch, dass die Auswahlkriterien und/oder Optimierungskriterien dem Bediener der Erntemaschine in der Anzeigeeinheit auswählbar angezeigt werden und die Auswahl mittels einer Touchscreen-Funktion oder über eine Tastatur erfolgen kann. Die mittels des aktivierten Auswahlkriteriums und/oder Optimierungskriteriums bestimmte Prozessführungsstrategie wird von der Steuer- und Regeleinrichtung 33 umgesetzt, die zur Durchführung des beschriebenen Verfahrens zur automatischen Einstellung zumindest eines von mehreren in einem Ernteprozess miteinander in Wechselwirkung stehenden Arbeitsorganen eingerichtet ist.

## Patentansprüche

1. Verfahren zur automatischen Einstellung zumindest eines von mehreren an einem Ernteprozess beteiligten Arbeitsorganen (3, 6, 7, 17, 18) einer selbstfahrenden Erntemaschine (1, 2), mit den Verfahrensschritten :
- Initiale Modellierung des Ernteprozesses **durch** zumindest ein Kennfeld (KFAi, KFRi), basierend auf einer für den ablaufenden Ernteprozess charakteristischen Datenbasis;
- Bestimmung eines initialen Arbeitspunktes (APi) des mindestens einen Arbeitsorganes (3, 6, 7, 17, 18) anhand der initialen Modellierung;
- Anpassung des zumindest einen Kennfeldes (KFA(n), KFR(n)) auf der Basis von aktuell **durch** Messungen erhobenen, den Ernteprozess beeinflussenden Daten;
- Bestimmung eines neuen Arbeitspunktes (AP(n)) des mindestens einen Arbeitsorganes (3, 6, 7, 17, 18) in Abhängigkeit von der Adaption des Kennfeldes (KFA(n), KFR(n));
- iterative Annäherung an den neuen Arbeitspunkt AP(n+1)); **gekennzeichnet durch** die weiteren Verfahrenschritte
- Abwarten des Erreichens eines quasistationären Maschinenverhaltens nach einem Annäherungsschritt (AS) an den neuen Arbeitspunkt (AP(n)); und
- Beibehalten der sich für den Arbeitspunkt (AP(n)) ergebenden Werte für die Einstellparameter der Arbeitsorgane (3, 6, 7, 17, 18) in Abhängigkeit von dem Resultat einer Validierung des Kennfeldes (KFA(n), KFR(n)) oder Zurücksetzten auf ihre dem vorangehenden Arbeitspunkt (AP(n-1)) entsprechenden Werte.

2. Verfahren nach Anspruch 1, **dadurch gekennzeichnet, dass** eine Grundparametrisierung des Kennfeldes (KFA(n), KFR(n)) durchgeführt wird, aus der initiale Einstellparameter des mindestens einen Arbeitsorganes (3, 6, 7, 17, 18) bestimmt werden.

3. Verfahren nach einem der Ansprüche 1 oder 2, **dadurch gekennzeichnet, dass** nach einem Annäherungsschritt (AS) an den neuen Arbeitspunkt (AP(n)) die initialen Einstellparameter des mindestens einen Arbeitsorganes (3., 6, 7, 17, 18) adaptiert werden.

4. Verfahren nach Anspruch 3, **dadurch gekennzeichnet, dass** eine Validierung des adaptierten Kennfeldes (KFA(n), KFR(n)) durchgeführt wird.

5. Verfahren nach einem der Ansprüche 1 bis 4, **dadurch gekennzeichnet, dass** der aus der Adaption des Kennfeldes (KFA(n), KFR(n)) resultierende Arbeitspunkt (AP(n)) hinsichtlich seiner Plausibilität geprüft wird.

6. Verfahren nach einem der Ansprüche 1 bis 3, **dadurch gekennzeichnet, dass** die Adaption des Kennfeldes (KFA(n), KFR(n)) dynamisch durchgeführt wird.

7. Verfahren nach einem der Ansprüche 1 bis 6, **dadurch gekennzeichnet, dass** die Einstellung des zumindest einen. Arbeitsorganes (3, 6, 7, 17, 18) in Abhängigkeit von der der Erntemaschine (1, 2) zugeführten Erntegutmenge durchgeführt wird.

8. Verfahren nach einem der Ansprüche 1 bis 7, **dadurch gekennzeichnet, dass** die Einstellung des zumindest einen Arbeitsorganes (3, 6, 7, 17, 18) in Abhängigkeit von der dem Arbeitsorgan (3, 6, 7, 17, 18) zugeführten Erntegutmenge durchgeführt wird.

9. Verfahren nach einem der Ansprüche 1 bis 7, **dadurch gekennzeichnet, dass** die Einstellung des zumindest einen Arbeitsorganes (3, 6, 7, 17, 18) in Abhängigkeit von der Neigung des mindestens einen Arbeitsorganes (3, 6, 7, 17, 18) durchgeführt wird.

10. Verfahren nach einem der Ansprüche 1 bis 9, **dadurch gekennzeichnet, dass** das Verfahren zur Einstellung durch eine manuelle Beeinflussung eines Einstellparameters automatisch unterbrochen wird.

11. Verfahren nach einem der Ansprüche 1 bis 10, **dadurch gekennzeichnet, dass** die während des Ernteprozesses durch Messungen erhobenen, den Ernteprozess beeinflussenden Daten erfasst und abgespeichert werden.

## Claims

1. A method of automatically adjusting at least one of a plurality of working members (3, 6, 7, 17, 18) involved in a harvesting process of a self-propelled harvester (1, 2) comprising the method steps:
- initially modelling the harvesting process by at least one performance map (KFAi, KFRi) based on a database characteristic of the harvesting process taking place;
- determining an initial working point (APi) of the at least one working member (3, 6, 7, 17, 18) on the basis of the initial modelling;
- adapting the at least one performance map (KFA(n), KFR(n)) on the basis of data currently acquired by measurements and influencing the harvesting process;
- determining a new working point (AP(n)) of the at least one working member (3, 6, 7, 17, 18) in dependence on the adaptation of the performance map (KFA(n), KFR(n));
- iteratively approximating to the new working point (AP(n+1));
- **characterised by** the further method steps:
- awaiting the attainment of a quasi-stationary machine performance after an approximation step (AS) to the new working point (AP(n)); and
- retaining the values arising for the working point (AP(n)) for the adjusting parameters of the working members (3, 6, 7, 17, 18) in dependence on the result of validation of the performance map (KFA(n), KFR(n)) or resetting to their values corresponding to the preceding working point (AP(n-1)).

2. A method according to claim 1 **characterised in that** basic parametrisation of the performance map (KFA(n), KFR(n)) is carried out, from which initial adjusting parameters of the at least one working member (3, 6, 7, 17, 18) are determined.

3. A method according to one of claims 1 and 2 **characterised in that** after an approximation step (AS) to the new working point (AP(n)) the initial adjusting parameters of the at least one working member (3, 6, 7, 17, 18) are adapted.

4. A method according to claim 3 **characterised in that** validation of the adapted performance map (KFA(n), KFR(n)) is performed.

5. A method according to one of claims 1 to 4 **characterised in that** the working point (AP(n)) resulting from the adaptation of the performance map (KFA(n), KFR(n)) is checked in respect of its plausibility.

6. A method according to one of claims 1 to 3 **characterised in that** adaptation of the performance map (KFA(n), KFR(n)) is performed dynamically.

7. A method according to one of claims 1 to 6 **characterised in that** adjustment of the at least one working member (3, 6, 7, 17, 18) is performed in dependence on the amount of crop fed to the harvester (1, 2).

8. A method according to one of claims 1 to 7 **characterised in that** adjustment of the at least one working member (3, 6, 7, 17, 18) is performed in dependence on the amount of crop fed to the working member (3, 6, 7, 17, 18).

9. A method according to one of claims 1 to 7 **characterised in that** adjustment of the at least one working member (3, 6, 7, 17, 18) is performed in dependence on the inclination of the at least one working member (3, 6, 7, 17, 18).

10. A method according to one of claims 1 to 9 **characterised in that** the adjusting method is automatically interrupted by manual influencing of an adjusting parameter.

11. A method according to one of claims 1 to 10 **characterised in that** the data acquired by measurements during the harvesting process and influencing the harvesting process are detected and stored.

## Revendications

1. Procédé de réglage automatique d'au moins un de plusieurs organes de travail (3, 6, 7, 17, 18), associés à un processus de récolte, d'une machine de récolte automotrice (1, 2), comportant les étapes de procédé suivantes :
- modélisation initiale d'un processus de récolte par l'intermédiaire d'au moins un diagramme caractéristique (KFAi, KFRi) sur la base d'une base de données caractéristique du processus de récolte en cours ;
- détermination d'un point de travail initial (APi) du au moins un organe de travail (3, 6, 7, 17, 18) à l'aide de la modélisation initiale ;
- adaptation du au moins un diagramme caractéristique (KFA(n), KFR(n)) sur la base de données recueillies instantanément par le biais de mesures et influant sur le processus de récolte ;
- détermination d'un nouveau point de travail (AP(n)) du au moins un organe de travail (3, 6, 7, 17, 18) en fonction de l'adaptation du diagramme caractéristique (KFA(n), KFR(n)) ;
- approche itérative du nouveau point de travail (AP(n+1)) ;
- attente de l'atteinte d'un comportement quasi stationnaire de la machine après une étape d'approche (AS) du nouveau point de travail (AP(n)) ; et
- maintien, pour les paramètres de réglage des organes de travail (3, 6, 7, 17, 18), des valeurs obtenues pour le point de travail (AP(n)) en fonction du résultat d'une validation du diagramme caractéristique (KFA(n), KFR(n)) ou retour à leurs valeurs correspondant au point de travail précédent (AP(n-1)).

2. Procédé selon la revendication 1, **caractérisé en ce qu'**est réalisé un paramétrage de base du diagramme caractéristique (KFA(n), KFR(n)) à partir duquel sont déterminés des paramètres de réglage initiaux du au moins un organe de travail (3, 6, 7, 17, 18).

3. Procédé selon une des revendications 1 ou 2, **caractérisé en ce que**, après une étape d'approche (AS) du nouveau point de travail (AP(n)), les paramètres de réglage initiaux du au moins un organe de travail (3, 6, 7, 17, 18) sont adaptés.

4. Procédé selon la revendication 3, **caractérisé en ce qu'**une validation du diagramme caractéristique adapté (KFA(n), KFR(n)) est effectuée.

5. Procédé selon une des revendications 1 à 4, **caractérisé en ce que** le point de travail (AP(n)) résultant de l'adaptation du diagramme caractéristique (KFA(n), KFR(n)) est vérifié du point de vue de sa plausibilité.

6. Procédé selon une des revendications 1 à 3, **caractérisé en ce que** l'adaptation du diagramme caractéristique (KFA(n), KFR(n)) est réalisée dynamiquement.

7. Procédé selon une des revendications 1 à 6, **caractérisé en ce que** le réglage du au moins un organe de travail (3, 6, 7, 17, 18) est effectué en fonction de la quantité de produit récolté amenée à la machine de récolte (1, 2).

8. Procédé selon une des revendications 1 à 7, **caractérisé en ce que** le réglage du au moins un organe de travail (3, 6, 7, 17, 18) est effectué en fonction de la quantité de produit récolté amenée à l'organe de travail (3, 6, 7, 17, 18).

9. Procédé selon une des revendications 1 à 7, **caractérisé en ce que** le réglage du au moins un organe de travail (3, 6, 7, 17, 18) est effectué en fonction de l'inclinaison du au moins un organe de travail (3, 6, 7, 17, 18).

10. Procédé selon une des revendications 1 à 9, **caractérisé en ce que** le procédé de réglage est interrompu automatiquement par une action manuelle sur un paramètre de réglage.

11. Procédé selon une des revendications 1 à 10, **caractérisé en ce que** les données recueillies par le biais de mesures pendant le processus de récolte et influant sur le processus de récolte sont enregistrées et mémorisées.
